(19) Europäisches Patentamt / European Patent Office / Office européen des brevets

(11) **EP 3 255 820 B1**

(12) **EUROPÄISCHE PATENTSCHRIFT**

(45) Veröffentlichungstag und Bekanntmachung des Hinweises auf die Patenterteilung:
**24.01.2024   Patentblatt 2024/04**

(51) Internationale Patentklassifikation (IPC):
**H04J 3/06** *(2006.01)*      **H02H 3/30** *(2006.01)*
**H02H 7/26** *(2006.01)*      *H02H 3/00* *(2006.01)*
**H02H 1/00** *(2006.01)*

(21) Anmeldenummer: **17174205.9**

(22) Anmeldetag: **02.06.2017**

(52) Gemeinsame Patentklassifikation (CPC):
**H04J 3/0664; H02H 3/30; H04L 43/0858;**
**H04L 43/16;** H02H 1/0084; Y04S 40/00

(54) **VERFAHREN ZUR SYNCHRONISIERTEN ERFASSUNG VON ZUR STEUERUNG VON DIFFERENTIALSCHUTZEINRICHTUNGEN ELEKTRISCHER ENERGIELEITUNGEN BENÖTIGTE MESSDATEN**

METHOD FOR SYNCHRONIZED CAPTURE OF MEASUREMENT DATA REQUIRED FOR CONTROLLING DIFFERENTIAL PROTECTION DEVICES OF ELECTRICAL POWER LINES

PROCÉDÉ D'ENREGISTREMENT SYNCHRONISÉ DE DONNÉES DE MESURE NÉCESSAIRES À LA COMMANDE DE DISPOSITIF DE PROTECTION DIFFÉRENTIELLE DE LIGNES ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2016   AT 505152016**

(43) Veröffentlichungstag der Anmeldung:
**13.12.2017   Patentblatt 2017/50**

(73) Patentinhaber: **Sprecher Automation GmbH**
**4020 Linz (AT)**

(72) Erfinder:
• **Aichhorn, Andreas**
  **4040 Linz (AT)**
• **Etzlinger, Bernhard**
  **4020 Linz (AT)**

(74) Vertreter: **Hübscher & Partner Patentanwälte GmbH**
**Spittelwiese 4**
**4020 Linz (AT)**

(56) Entgegenhaltungen:
WO-A1-2005/002100      WO-A1-2013/107896
WO-A1-2013/167977      WO-A1-2015/116980
US-B1- 6 661 810

• **ERWIN DAVIS ET AL: "Interrelationship of protection and communication to improve power system reliability", 2015 68TH ANNUAL CONFERENCE FOR PROTECTIVE RELAY ENGINEERS, IEEE, 30. März 2015 (2015-03-30), Seiten 717-726, XP032774099, DOI: 10.1109/CPRE.2015.7102205 [gefunden am 2015-05-05]**
• **MICHAEL J THOMPSON: "Percentage restrained differential, percentage of what?", PROTECTIVE RELAY ENGINEERS, 2011 64TH ANNUAL CONFERENCE FOR, IEEE, 11. April 2011 (2011-04-11), Seiten 278-289, XP031972570, DOI: 10.1109/CPRE.2011.6035629 ISBN: 978-1-4577-0494-9**
• **NIKOLAOS M FRERIS ET AL: "A model-based approach to clock synchronization", DECISION AND CONTROL, 2009 HELD JOINTLY WITH THE 2009 28TH CHINESE CONTROL CONFERENCE. CDC/CCC 2009. PROCEEDINGS OF THE 48TH IEEE CONFERENCE ON, IEEE, PISCATAWAY, NJ, USA, 15. Dezember 2009 (2009-12-15), Seiten 5744-5749, XP031619271, ISBN: 978-1-4244-3871-6**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- TSURU M ET AL: "Estimation of clock offset from one-way delay measurement on asymmetric paths", APPLICATIONS AND THE INTERNET (SAINT) WORKSHOPS, 2002. PROCEEDINGS. 2002 SYMPOSIUM ON NARA, JAPAN 28 JAN.-1 FEB. 2002, LOS ALAMITOS, CA, USA,IEEE COMPUT. SOC, US, 28. Januar 2002 (2002-01-28), Seiten 126-133, XP010587872, DOI: 10.1109/SAINTW.2002.994563 ISBN: 978-0-7695-1450-5
- QI WU ET AL: "Reliable clock skew estimation algorithm for one-way measurements", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, Bd. 4, 20. Juni 2004 (2004-06-20), Seiten 1846-1850, XP010709642, DOI: 10.1109/ICC.2004.1312840 ISBN: 978-0-7803-8533-7
- B. KASZTENNY ET AL: "Fallback algorithms for line current differential protection applied with asymmetrical channels upon the loss of time reference", 11TH IET INTERNATIONAL CONFERENCE ON DEVELOPMENTS IN POWER SYSTEMS PROTECTION (DPSP 2012), 23. April 2012 (2012-04-23), Seiten 30-36, XP055418966, DOI: 10.1049/cp.2012.0090 ISBN: 978-1-84919-620-8
- Bogdan Kasztenny ET AL: "Tutorial on Operating Characteristics of Microprocessor-Based Multiterminal Line Current Differential Relays Tutorial on Operating Characteristics of Microprocessor-Based Multiterminal Line Current Differential Relays", Previous revised edition released November 2011 Originally presented at the 38th Annual Western Protective Relay Conference, 15. Juni 2014 (2014-06-15), Seiten 1-31, XP055418531, Gefunden im Internet: URL:https://selinc.com/api/download/98362/ [gefunden am 2017-10-24]
- PAXSON V: "ON CALIBRATING MEASUREMENTS OF PACKET TRANSMIT TIMES", ACM SIGMETRICS PERFORMANCE EVALUATION REVIEW, ASSOCIATION FOR COMPUTING MACHINERY, NEW YORK, NY, US, vol. 26, no. 1, 1 June 1998 (1998-06-01), pages 11-21, XP000862905, ISSN: 0163-5999

**Beschreibung**

Technisches Gebiet

Die Erfindung bezieht sich auf ein Verfahren zur synchronisierten Erfassung von zur Steuerung von Differentialschutzeinrichtungen elektrischer Energieleitungen benötigten Messdaten, die zu Paketen zusammengefasst über paketvermittelnde Netze zwischen zwei Netzelementen übertragen werden, deren Uhren anhand gemessener Sende- und Empfangszeiten einer vorgegebenen Anzahl an Synchronisiernachrichten synchronisiert werden, die zwischen den Netzelementen über das paketvermittelnde Netz in sich zyklisch wiederholenden Zeitintervallen übertragen werden, wobei aus den Sende- und Empfangszeiten die Laufzeiten der einzelnen Synchronisiernachrichten berechnet und entsprechend einer vorgegebenen, für die Übertragungsstrecke charakteristischen, statistischen Verteilung der Laufzeiten geordnet werden, und wobei aus der von den geordneten Laufzeiten abgeleiteten Laufzeitverteilung die zur Uhrensynchronisierung benötigten Parameterwerte berechnet werden.

Stand der Technik

Um bei Differentialschutzeinrichtungen elektrischer Energieleitungen die an den Enden der Energieleitung erfassten Messdaten für die Überwachung auswerten zu können, ist es erforderlich, nur gleichzeitig erfasste Messdaten miteinander zu vergleichen. Dies bedeutet, dass den Messstellen Uhren zugeordnet werden müssen, die zu synchronisieren sind, was insbesondere dann zu Schwierigkeiten führt, wenn die Datenübermittlung über paketvermittelnde Netze erfolgt, weil die Laufzeit in solchen paketvermittelnden Netzen von verschiedenen, beispielsweise von der Anzahl und Art der Netzknoten, dem jeweiligen Paketverkehr und der Priorität der zu übertragenden Datenpakete abhängigen Parametern bestimmt wird. Um diesen Schwierigkeiten zu begegnen, ist es bekannt (WO 2013/107896 A1), das Messdatenpaket im sendenden Netzelement mit einem Zeitstempel zu versehen und aus der Empfangszeit des empfangenden Netzelements sowie der mit dem Messdatenpaket übermittelten Sendezeit die Laufzeit zu ermitteln, sodass durch das empfangende Netzelement die jeweilige Laufzeit für die Bestimmung der zu vergleichenden Messdaten berücksichtigt werden kann. Voraussetzung hierfür ist allerdings eine Synchronisation der den beiden Netzteilen zugehörigen Uhren, was durch eine die Uhrzeit vorgebende Netzwerksuhr in an sich bekannter Weise über ein präzises Zeitprotokoll (PTP) bewerkstelligt wird, indem von der die Uhrzeit vorgebenden Uhr mit einem Zeitstempel versehene Synchronisiernachrichten gesendet werden, denen von den zu synchronisierenden Uhren der empfangenden Netzelemente die jeweilige Empfangszeit zugeordnet wird. Die Netzelemente mit den zu synchronisierenden Uhren senden dann eine Verzögerungsanforderung an das Netzelement mit der zeitvorgebenden Uhr, das die Empfangszeit dieser Verzögerungsanforderung rücksendet, sodass aus der Sende- und der Empfangszeit der Synchronisiernachricht und der Sende- und der Empfangszeit der Verzögerungsanforderung ein bestehender Unterschied zwischen den Uhrzeiten der die Uhrzeit vorgebenden Uhr und den Uhrzeiten der zu synchronisierenden Uhren ermittelt werden kann, allerdings nur unter der Voraussetzung eines ausreichend symmetrischen Übertragungsnetzes. Außerdem müssen die beteiligten Netzknoten zur Durchführung dieses Synchronisierverfahrens entsprechend ausgerüstet sein.

Damit die Laufzeitunterschiede der zwischen den Netzelementen gesendeten Synchronisiernachrichten vorteilhaft berücksichtigt werden können, ist bereits vorgeschlagen worden (WO 2005/002100 A1), eine entsprechende Anzahl von Synchronisiernachrichten vom Netzelement mit der zu synchronisierenden Uhr an das Netzelement mit der zeitbestimmenden Uhr zu übertragen und vom Netzelement mit der zeitbestimmenden Uhr eine weitere Synchronisiernachricht an das Netzelement mit der zu synchronisierenden Uhr zurück zu übertragen, um aus den übertragenen Sende- und Empfangszeiten der hin- und zurück gesendeten Synchronisiernachrichten deren jeweilige Laufzeit bestimmen zu können. Da die Laufzeiten eine für das jeweilige Netz charakteristische statistische Verteilung aufweisen, kann bei einer ausreichenden Anzahl an ermittelten Laufzeiten aus der sich ergebenden statistischen Verteilung die zur Uhrensynchronisation benötigten Parameter bestimmt werden. Nachteilig ist allerdings, dass zur Erfassung einer für eine ausreichend genaue statistische Auswertung benötigten Anzahl an Laufzeiten die hierfür erforderlichen Zeitintervalle zu lang sind, um Drifteigenschaften im Bereich des Netzwerks oder der Netzelemente unberücksichtigt lassen zu können.

Darstellung der Erfindung

Der Erfindung liegt somit die Aufgabe zugrunde, ein Verfahren zur Synchronisation der Uhren zweier zur Steuerung einer Differentialschutzeinrichtung elektrischer Energieleitungen eingesetzter Netzelemente eines paketvermittelnden Netzes mit mehreren Knotenpunkten so auszugestalten, dass eine für den Differentialschutz ausreichende Uhrensynchronisation mit vergleichsweise einfachen Mitteln sichergestellt werden kann.

Ausgehend von einem Verfahren der eingangs geschilderten Art löst die Erfindung die gestellte Aufgabe dadurch, dass die Synchronisiernachrichten vom Netzelement mit der zeitbestimmenden Uhr an das Netzelement mit der zu synchronisierenden Uhr übertragen werden und dass aus den Sende- und Empfangszeiten der vom Netzelement mit der zu synchronisierenden Uhr empfangenen Synchronisiernachrichten die Laufzeiten der einzelnen Synchronisiernachrichten berechnet werden.

Damit aus den Unterschieden zwischen der aus den Sende- und Empfangszeiten nach statistischen Verfahren abgeleiteten Laufzeitverteilung und der vorgegebenen, auf die Übertragungsstrecke bezogenen Laufzeitverteilung auf die Differenz der Zeitanzeigen der zu synchronisierenden Uhren rückgeschlossen werden kann, muss vorausgesetzt werden können, dass die Uhrzeit während des Beobachtungszeitraums nicht verstellt wird, die zu synchronisierenden Uhren einen konstanten Gangunterschied aufweisen und im Wesentlichen gleichbleibende physikalische Rahmenbedingungen gegeben sind, wovon bei entsprechend kurzen Zeitintervallen ausgegangen werden kann. Da lediglich Synchronisiernachrichten vom Netzelement mit der zeitbestimmenden Uhr gesendet werden, verkürzt sich die Zeit, die zur Erfassung der Laufzeit einer Synchronisiernachricht erforderlich ist, im Vergleich zu einer Laufzeiterfassung auf der Basis von zwischen den Netzelementen hin- und zurückgesendeten Synchronisiernachrichten erheblich, sodass die Zeitintervalle zur Ermittlung einer für eine ausreichend genaue statistische Auswertung der Laufzeitunterschiede so kurz gehalten werden können, dass konstanten Rahmenbedingungen innerhalb dieser Zeitintervalle vorausgesetzt werden können.

Zur Laufzeitbestimmung der in einem Zeitintervall vom Netzelement mit der die Uhrzeit vorgebenden Uhr gesendeten und vom Netzwerk mit der zu synchronisierenden Uhr empfangenen Synchronisiernachrichten wird jeweils die Differenz zwischen den Empfangs- und Sendezeiten gebildet. Diese von den Empfangs- und Sendezeiten abgeleiteten Laufzeiten beinhalten nicht nur die durch das paketvermittelnde Netz bedingten Laufzeitschwankungen, sondern auch die Zeit- und Gangunterschiede der beiden zu synchronisierenden Uhren. Da eine für die Übertragungsstrecke charakteristische Verteilung der Laufzeitschwankungen vorgegeben werden kann, können die aus den Empfangs- und Sendezeiten ermittelten Laufzeiten in Anlehnung an die statistische Laufzeitverteilung der Übertragungsstrecke geordnet werden, um aus den geordneten Laufzeiten eine statistische Laufzeitverteilung ableiten zu können, die einen Rückschluss auf den Zeit- und Gangunterschied der zu synchronisierenden Uhren erlaubt, sodass die zur Uhrensynchronisation benötigten Uhrenparameter mit statistischen Verfahren aus der gemessenen Laufzeitverteilung abgeleitet werden können. Durch die zyklische Wiederholung der Laufzeitbestimmungen kann die für die jeweilige Übertragungsstrecke charakteristische statistische Verteilung der Laufzeitunterschiede verfeinert und damit auch an sich ändernde Verhältnisse angepasst werden, womit die Genauigkeit der Uhrensynchronisation verbessert werden kann.

Wird von einem symmetrischen Netz, also von gleichen Übertragungsbedingungen in entgegengesetzter Richtung ausgegangen, so bedarf es lediglich der Übertragung der Synchronisiernachrichten in einer Richtung. Trifft diese Voraussetzung nicht zu und ist mit einem Datenaustausch zwischen den beiden Netzelementen in beiden Richtungen zu rechnen, so sind die unterschiedlichen, von der Laufrichtung abhängigen Laufzeitverteilungen für die Übertragungsstrecke zu berücksichtigen, was in vorteilhafter Art dadurch erreicht werden kann, dass zwischen den Netzelementen mit den zu synchronisierenden Uhren innerhalb der sich zyklisch wiederholenden Zeitspannen von beiden Netzelementen Synchronisiernachrichten gesendet, empfangen und entsprechend ausgewertet werden.

Da die Laufzeiten der für die Steuerung der Differentialschutzeinrichtungen benötigten, zu Paketen zusammengefassten Messdaten innerhalb der geforderten Auslösezeiten der Differentialschutzeinrichtungen liegen müssen, können die in den Zeitintervallen ermittelten Laufzeitstreuungen der Synchronisiernachrichten mit einem Schwellwert verglichen werden, um beim Überschreiten des Schwellwerts die Differentialschutzeinrichtung auf eine andere Übertragungsstrecke oder eine andere Schutzeinrichtung umzuschalten. Diese frühzeitige Umschaltung stellt kurze Auslösezeiten für die Differentialschutzeinrichtungen sicher.

Kurze Beschreibung der Erfindung

Anhand der Zeichnung wird das erfindungsgemäße Verfahren näher erläutert. Es zeigen

Fig. 1  ein schematisches Blockschaltbild einer Differentialschutzeinrichtung ei-ner elektrischen Energieleitung und

Fig. 2  ein Diagramm, das die Uhrzeit $t_s$ der zeitbestimmenden Uhr mit der Uhr-zeit $t_e$ der zu synchronisierenden Uhr in Beziehung setzt.

Weg zur Ausführung der Erfindung

Die Differentialschutzeinrichtung für eine elektrische Energieleitung 1 umfasst zwei Netzelemente 2, 3, in denen die Steuerung der für das Trennen der Energieleitung 1 vom übrigen Energienetz 4 vorgesehenen Schutzschalter 5, die Auswertung der für die Überwachung der Energieleitung 1 erforderlichen, von Messeinrichtungen 6 erfassten Messdaten, die Sender und Empfänger zur Übermittlung der zu Paketen zusammengefassten Messdaten und die Uhren zur Festlegung der Mess-, Sende- und Empfangszeiten zusammengefasst sind. Die Datenübertragung erfolgt über ein paketvermittelndes Netz 7. Sind die Uhren der beiden Netzelemente 2, 3 synchronisiert, so spielt die Laufzeit der Messdatenpakete keine Rolle, weil durch die Markierung der Messdatenpakete mit dem Sendezeitstempel durch die Uhr des jeweils sendenden Netzelements 2 bzw. 3 die gesendeten Messdaten zeitlich den Messdaten auf der Seite des empfangenden Netzelements 3 bzw. 2 zugeordnet werden können, um bei vorgegebenen Abweichungen die Energieleitung 1 durch ein Betätigen der Schutzschalter 5 vom Energienetz 4 abschalten zu können.

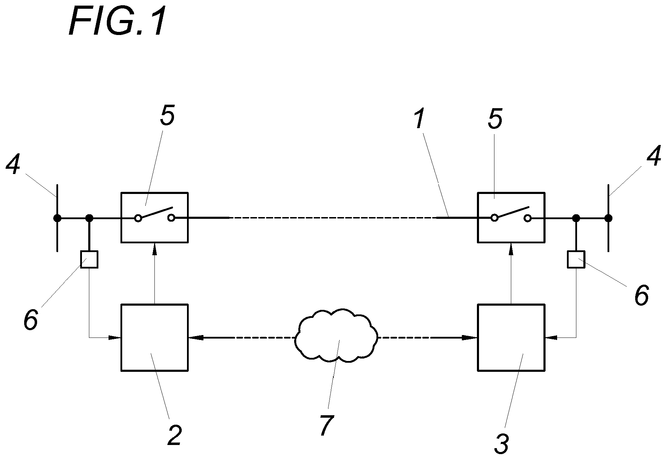

Wesentlich ist demnach eine ausreichende Synchronisierung der beiden Uhren der Netzelemente 2, 3. Zu diesem Zweck gibt die Uhr eines der beiden Netzelemente 2, 3 die Uhrzeit vor, der gegenüber die Uhr des jeweils anderen Netzelements synchronisiert wird. Im Falle des Ausführungsbeispiels nach der Fig. 1 wird angenommen, dass die Uhr des Netzelements 2 die Uhrzeit vorgibt, der gegenüber die Uhr des Netzelements 3 zu synchronisieren ist. Dementsprechend werden vom Netzelement 2 Synchronisiernachrichten mit den zugehörigen Sendezeiten über das paketvermittelnde Netz 7 an das Netzelement 3 übermittelt, und zwar in einer vorgegebenen Anzahl in jedem der aufeinanderfolgenden Zeitintervalle.

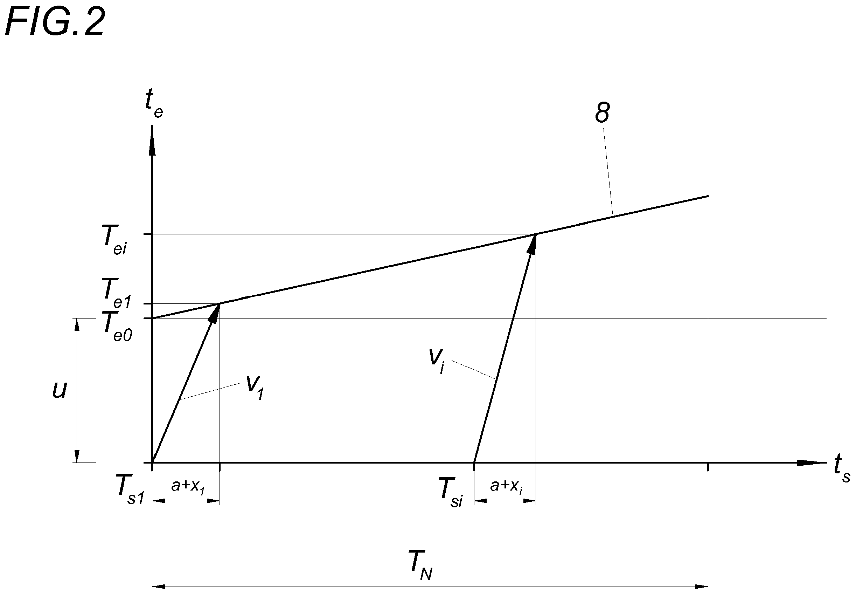

In der Fig. 2 ist ein solches Zeitintervall $T_N$ entlang der Abszisse angedeutet, auf der die Sendezeit $T_{s1}$ für die erste der Synchronisiernachrichten des Netzelements 2 sowie die Sendezeit $T_{si}$ für die i-te Synchronisiernachricht eingetragen sind. Während die Uhr des Netzelements 2 zu Beginn des Zeitintervalls $T_N$ eine Zeit $T_{s1}$ anzeigt, wird auf der zu synchronisierenden Uhr des Netzelements 3 eine Uhrzeit $T_{e0}$ ausgewiesen, die sich um den Betrag u unterscheidet. Außerdem weist die Uhr des Netzelements 3 gegenüber der Uhr des Netzelements 2 einen Gangunterschied auf, der durch eine Steigung s der die Uhrzeit der Uhr des Netzelements 3 wiedergebenden Geraden 8 angedeutet wird. Um die Uhren der beiden Netzelemente 2, 3 zu synchronisieren, müssen Uhrenparameter ermittelt werden, die einerseits den Betrag u der unterschiedlichen Zeitanzeigen und anderseits die Steigung s des Gangunterschieds berücksichtigen.

Zu diesem Zweck werden innerhalb des Zeitintervalls $T_N$ eine vorgegebene Anzahl von Synchronisiernachrichten über das paketvermittelnde Netz 7 vom Netzelement 2 zum Netzelement 3 übertragen. Von diesen Synchronisiernachrichten sind die erste und die i-te durch die Vektoren $v_1$ und $v_i$ angedeutet. Die zum Zeitpunkt $T_{s1}$ gesandte Synchronisiernachricht wird zur Zeit $T_{e1}$ der Uhr des Netzelements 3 empfangen. Die Laufzeit setzt sich aus einem durch die Übertragungsstrecke vorgegebenen konstanten Betrag a ohne Verzögerung und einer Verzögerungszeit $x_1$ zusammen, die von den jeweiligen Übertragungsbedingungen im paketvermittelnden Netz 7 abhängt und daher Schwankungen unterworfen ist, die allerdings eine für die Übertragungsstrecke charakteristische, statische Verteilung aufweisen. Die zum Zeitpunkt $T_{si}$ gesendete Synchronisiernachricht hat eine Laufzeit $a + x_i$, was zu einer Empfangszeit $T_{ei}$ führt. Dies bedeutet, dass sich die Uhrzeiten $T_{e1}$ und $T_{ei}$ wie folgt angeben lassen:

$$T_{e1} = T_{s1} + u + s.(a + x_1) \text{ und } T_{ei} = T_{s1} + u + s.(T_{si} - T_{s1} + a + x_i)$$

Da die Laufzeitschwankungen x einer von der Übertragungsstrecke abhängigen statistischen Verteilung unterliegen und somit die aus den Empfangs- und Sendezeiten ermittelten Laufzeiten ebenfalls von dieser Verteilung abhängige Schwankungen aufweisen, kann unter Berücksichtigung der für die Übertragungsstrecke vorgebbaren, charakteristischen Laufzeitschwankungen mit statistischen Verfahren auf den durch die Steigung s definierten Gangunterschied und den Betrag u für die Anzeigedifferenz zum Zeitpunkt $T_{s1}$ mit der Wirkung rückgeschlossen werden, dass Uhrenparameter zur Uhrensynchronisation zur Verfügung gestellt werden können, die aufgrund der Bezugnahme auf eine vorgegebenen statistischen Verteilung eine höhere Genauigkeit der Synchronisation mit einem geringeren Aufwand ermöglicht, ohne in den Knoten des paketvermittelnden Netzes 7 korrigierende Uhren vorsehen zu müssen. In einem eingeschwungenen Zustand der Uhren kann mithilfe des erfindungsgemäßen Verfahrens auch die Übertragungsqualität beurteilt werden, die sich in der Streuung der Laufzeiten wiederspiegelt. Durch einen Vergleich der in einem Zeitintervall $T_N$ ermittelten Laufzeitstreuung mit einem vorgegebenen Schwellwert der zulässigen Laufzeitstreuung kann somit die Differentialschutzeinrichtung frühzeitig auf eine andere Übertragungsstrecke oder auf eine Schutzschaltung umgeschaltet werden, die keine Übertragungsstrecke benötigt.

## Patentansprüche

**1.** Verfahren zur synchronisierten Erfassung von zur Steuerung von Differentialschutzeinrichtungen elektrischer Energieleitungen (1) benötigten Messdaten, die zu Paketen zusammengefasst über paketvermittelnde Netze (7) zwischen zwei Netzelementen (2, 3) übertragen werden, deren Uhren anhand gemessener Sende- und Empfangszeiten $(T_s, T_e)$ einer vorgegebenen Anzahl an Synchronisiernachrichten synchronisiert werden, die zwischen den Netzelementen (2, 3) über das paketvermittelnde Netz (7) in sich zyklisch wiederholenden Zeitintervallen $(T_N)$ übertragen werden, wobei aus den Sende- und Empfangszeiten $(T_s, T_e)$ die Laufzeiten der einzelnen Synchronisiernachrichten berechnet und entsprechend einer vorgegebenen, für die Übertragungsstrecke charakteristischen, statistischen Verteilung der Laufzeiten geordnet werden, und wobei aus der von den geordneten Laufzeiten abgeleiteten Laufzeitverteilung die zur Uhrensynchronisierung benötigten Parameterwerte berechnet werden, **dadurch gekennzeichnet, dass** die Synchronisiernachrichten lediglich vom Netzelement (2) mit der zeitbestimmenden Uhr an das Netzelement (3) mit der zu synchronisierenden Uhr übertragen werden und dass aus den Sende- und Empfangszeiten ($T_s$, $T_e$) der vom Netzelement (3) mit der zu synchronisierenden Uhr empfangenen Synchronisiernachrichten die Laufzeiten der einzelnen Synchronisiernachrichten berechnet werden.

2. Verfahren nach Anspruch 1, **dadurch gekennzeichnet, dass** die in den Zeitintervallen ($T_N$) ermittelten Laufzeitstreuungen der Synchronisiernachrichten mit einem Schwellwert verglichen werden und dass beim Überschreiten des Schwellwerts die Differentialschutzeinrichtung auf eine andere Übertragungsstrecke oder eine andere Schutzeinrichtung umgeschaltet wird.

**Claims**

1. Method for the synchronized acquisition of measurement data required for the control of differential protection devices of electrical power lines (1), which measurement data is transmitted in packets via packet-switching networks (7) between two network elements (2, 3) whose clocks are synchronized on the basis of measured transmission and reception times ($T_s$, $T_e$) of a predetermined number of synchronization messages, which are transmitted between the network elements (2, 3) via the packet-switching network (7) at cyclically repeating time intervals ($T_N$), whereby the transit times of the individual synchronization messages are calculated from the transmission and reception times ($T_s$, $T_e$) and are ordered in accordance with a predetermined, for the transmission part characteristic statistical distribution of the transit times, and whereby the parameter values required for clock synchronization are calculated from the transit time distribution derived from the ordered transit times, **characterized in that** the synchronization messages are transmitted only from the network element (2) with the time-determining clock to the network element (3) with the clock to be synchronized, and **in that** the transit times of the individual synchronization messages are calculated from the transmission and reception times ($T_s$, $T_e$) of the synchronization messages received by the network element (3) with the clock to be synchronized.

2. Method according to claim 1, **characterized in that** the transit time scatterings of the synchronization messages determined in the time intervals ($T_N$) are compared with a threshold value and that when the threshold value is exceeded, the differential protection device is switched over to another transmission path or another protection device.

**Revendications**

1. Procédé d'enregistrement synchronisé de données de mesure nécessaires à la commande de dispositifs de protection différentielle de lignes électriques (1), dans lequel lesdites données sont transmises, regroupées par paquets, par des réseaux à commutation de paquets (7) entre deux éléments de réseau (2, 3) dont les horloges sont synchronisées à l'aide de temps d'émission et de réception mesurés ($T_s$, $T_e$) d'un nombre prédéterminé de messages de synchronisation qui sont transmis entre les éléments de réseau (2, 3) par l'intermédiaire du réseau de commutation de paquets (7) à des intervalles de temps ($T_N$) qui se répètent de façon cyclique, dans lequel la durée des différents messages de synchronisation est calculée à partir des temps d'émission et de réception ($T_s$, $T_e$) et est transmise en fonction d'une distribution statistique prédéterminée des temps de propagation qui est caractéristique de la distance de transmission, et dans lequel les valeurs de paramètre nécessaires à la synchronisation de l'horloge sont calculées à partir de la distribution des temps de propagation dérivée des temps de propagation ordonnés, **caractérisé en ce que en ce que** les messages de synchronisation sont transmis uniquement de l'élément de réseau (2) comprenant l'horloge déterminant le temps à l'élément de réseau (3) comprenant l'horloge à synchroniser, et **en ce que** les temps de propagation des différents messages de synchronisation sont calculés à partir des temps d'émission et de réception ($T_s$, $T_e$) des messages de synchronisation reçus par l'élément de réseau (3) comprenant l'horloge à synchroniser.

2. Procédé selon la revendication 1, **caractérisé en ce que** les dispersions de temps de propagation des messages de synchronisation déterminées dans les intervalles de temps ($T_N$) sont comparées à une valeur de seuil et **en ce que**, en cas de dépassement de la valeur de seuil, le dispositif de protection différentielle est commuté sur une autre ligne de transmission ou sur un autre dispositif de protection.

FIG.1

EP 3 255 820 B1

# FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013107896 A1
- WO 2005002100 A1